# EUROPÄISCHE PATENTSCHRIFT

(11) **EP 1 813 965 B1**
(45) Veröffentlichungstag und Bekanntmachung des Hinweises auf die Patenterteilung: **02.03.2011**
(21) Anmeldenummer: 06025176.6
(22) Anmeldetag: 06.12.2006
(51) Int. Cl.: G01S 17/93, G01S 17/87, G01S 17/36, G01S 7/497

(54) **PMD-System und Verfahren zur Abstandsmessung von einem Objekt**
PMD system and method for distance measurement of an object
Système PMD et procédé destinés à la mesure de la distance par rapport à un objet

(30) Priorität: 27.01.2006 DE 102006004019
(43) Veröffentlichungstag der Anmeldung: 01.08.2007
(73) Patentinhaber: AUDI AG, 85045 Ingolstadt (DE)
(72) Erfinder: Riedel, Helmut, 86697 Oberhausen (DE); Grünleitner, Holger, 85049 Ingolstadt (DE)
(74) Vertreter: Thielmann, Frank

(56) Entgegenhaltungen:
- DE-A1- 10 346 731
- DE-A1-102004 031 097

## Beschreibung

Die Erfindung betrifft ein PMD-System und ein Verfahren zur Abstandsmessung von einem Objekt.

Bei PMD (Photonic Mixer Device)-Systemen wird beispielsweise mit einer intensitätsmodulierten Lichtquelle die zu vermessende Szene ausgeleuchtet. Die dazu erforderliche Lichtmenge kann dabei jedoch nicht grundsätzlich in allen Fällen von einer einzigen Lichtquelle bereitgestellt werden, da einerseits physikalische Limitierungen bezüglich der verfügbaren Lichtleistung und andererseits gesetzliche Einschränkungen durch die Vorschriften zum Schutz des menschlichen Auges bestehen.

Ganz allgemein ist eine Vorrichtung und ein Verfahren zur Abstandsbestimmung von Objekten in einem Umfeld des Kraftfahrzeugs aus der DE 103 36 682 A1 bekannt. Die Vorrichtung umfasst eine Mehrzahl an Sendeeinrichtungen, welche an unterschiedlichen Positionen im Fahrzeug angeordnet sind. Um Verfälschungen der Entfernungsmessung reduzieren oder vermeiden zu können, wird dort vorgeschlagen, die Systemauslegung derart zu gestalten, dass die als Lichtquellen ausgebildeten Sendeeinrichtungen in zeitlicher Reihenfolge nacheinander jeweils ein Sendesignal erzeugen. Durch dieses alternierende Betreiben der Sendeeinrichtungen soll erreicht werden, dass die von den verschiedenen Sendeeinrichtungen emittierten und an einem der Objekte reflektierten Sendesignale in Abhängigkeit von dem alternierenden Betrieb eindeutig durch eine Empfangseinrichtung identifizierbar sind. Falls in einer Anwendung jedoch kurze Bildwiederholraten erforderlich sind, kann dieses Verfahren und diese Vorrichtung nur bedingt eingesetzt werden, da für einen einzigen Bildtakt die Lichtquellen sequentiell angesteuert werden müssen. Weiterhin wird dabei die Szene jeweils nur von einer einzigen Lichtquelle ausgeleuchtet, so dass schlecht reflektierende Objekte unzureichende Signale liefern.

In Dokument DE 10 2004 031 097 A1 ist ein Lasermessgerät beschrieben, mit dem eine Entfernungsmessung ermöglicht ist. Um eine ausreichende Energie für eine zuverlässige Messung zu erhalten, wird vorgeschlagen, mittels eines Lasers kurze Lichtpulse mit sehr hoher Leistung zu emittieren. Um eine thermische Belastung der Laser gering zu halten, können zum Erzeugen einer Sequenz von Lichtpulsen mehrerer Laser sequentiell hintereinander angesteuert werden. Alternativ dazu wird vorgeschlagen, zum Verringern einer thermischen Belastung der Laser jedem Laser ein Lichtverstärkerelement nachzuordnen. Im Zusammenhang mit einem gleichzeitigen Betrieb von zwei Lasern ist beschrieben, hierbei eine Trennung der Lichtpulse durch eine Codierung zu bewirken, so dass die Signale der beiden Pulse eindeutig voneinander unterschieden werden können.

Darüber hinaus ist aus der DE 601 05 791 T2 ein Verfahren und eine Vorrichtung zum Messen von Phasendifferenzen zwischen mindestens einem ersten und einem zweiten intensitätsmodulierten optischen Signal bekannt. Die beiden Signale stammen aus zwei separaten Lichtquellen. Es kann auch vorgesehen sein, dass jedes einzelne dieser Lichtsignale auch aus mehreren Lichtquellen erzeugt werden kann. Wenn mehrere Lichtquellen verwendet werden, die von einem einzigen Referenzoszillator gesteuert werden, welcher mehrere elektrische Signale liefert, ist es jedoch zwingend erforderlich, dass diese elektrischen Signale phasenstarr zueinander sind. Die Lichtquellen müssen somit zwingend phasenstarr zueinander sein.

Darüber hinaus ist aus der DE 100 47 170 C2 ein PMD-System zur Entfernungsmessung bekannt. Das PMD-System umfasst zumindest einen PMD-Empfänger sowie mindestens eine intensitätsmodulierbare Sendeeinheit. Mittels einer Ansteuerelektronik ist der PMD-Empfänger und die Sendeeinheit mit jeweils mindestens einer Modulationsspannung gleicher Modulationsfrequenz ansteuerbar. Die Phase des Modulationssignals ist dabei zum Erzielen einer speziellen Modulationsart einstellbar. Ein wesentliches Problem bei diesem PMD-System ist darin zu sehen, dass bei der Verwendung von mehreren intensitätsmodulierbaren Sendeeinheiten eine Entfernungsmessung nur relativ unzureichend durchgeführt werden kann, da ein Abstimmen der intensitätsmodulierbaren Sendeeinheiten nicht möglich ist.

In Dokument DE 103 46 731 A1 ist ein PMD-System mit einem Sender zum Aussenden eines modulierten Signals in Richtung auf ein Zielobjekt und mit einem Empfänger zum Empfangen eines Reflektionssignals beschrieben. Das PMD-System weist dabei die für ein solches System typische Modulationseinheit auf, welche sowohl mit dem Sender als auch mit dem Empfänger gekoppelt ist und welche eine Modulation einer Intensität des Sendesignals ermöglicht.

Darüber hinaus sind seit kurzem auch PMD-Systeme mit einer Mehrzahl an räumlich getrennt angeordneten Lichtquellen bekannt. Wird mit einem derartigen System eine Szene dreidimensional vermessen, so sind die Lichtwege von den einzelnen Lichtquellen zu einem Objekt in der Szene unterschiedlich lang. Da ein PMD-System nach dem Laufzeitprinzip arbeitet, ergeben sich durch die unterschiedlich langen Lichtwege Beeinflussungen der Signalauswertung, die eine Verfälschung der Entfernungsmessung zur Folge haben.

Daher ist es Aufgabe der vorliegenden Erfindung, ein PMD-System und ein Verfahren zur Abstandsmessung von einem Objekt zu schaffen, mit welchem eine exakte Entfernungsmessung gewährleistet werden kann, wenn das PMD-System eine Mehrzahl an Sendeeinheiten aufweist.

Diese Aufgabe wird durch ein PMD-System, welches die Merkmale nach Patentanspruch 1 aufweist, und ein Verfahren, welches die Merkmale nach Patentanspruch 7 aufweist, gelöst.

Ein erfindungsgemäßes PMD-System zur Abstandsmessung von einem Objekt umfasst eine erste intensitätsmodulierbare Sendeeinheit und zumindest eine zweite intensitätsmodulierbare Sendeeinheit. Die beiden Sendeeinheiten sind an unterschiedlichen Positionen relativ zum Objekt angeordnet und somit auch räumlich getrennt positioniert. Des Weiteren umfasst das PMD-System mindestens einen PMD-Empfänger, welcher zum Empfangen der von den Sendeeinheiten gesendeten und von dem Objekt reflektierten Signalen ausgebildet ist. Darüber hinaus weist das PMD-System eine zentrale Modulationseinheit auf, welche zur Erzeugung eines gemeinsamen Modulationssignals für die erste und zumindest die zweite Sendeeinheit ausgebildet ist. Es wird somit ein PMD-System vorgeschlagen, bei dem mehrere identisch modulierte Lichtquellen räumlich getrennt zur Ausleuchtung einer Szene, in der das Objekt positioniert ist, eingesetzt werden. Die einzelnen Sendeeinheiten werden dabei von einer zentralen Modulationseinheit angesteuert. Das PMD-System ist derart ausgebildet, dass eine Phasenlage des gemeinsamen Modulationssignals für jede einzelne Sendeeinheit individuell veränderbar ist, derart, dass mit jeder der beiden Sendeeinheiten im Wesentlichen gleiche Abstandswerte des Objekts ermittelbar sind. Durch das vorgeschlagene PMD-System kann somit eine sehr exakte Entfernungsmessung auch dann durchgeführt werden, wenn das PMD-System zumindest zwei Sendeeinheiten aufweist, welche räumlich getrennt zueinander angeordnet sind.

Darüber hinaus kann durch die Verwendung von zumindest zwei Sendeeinheiten stets eine ausreichende benötigte Lichtleistung zur Verfügung gestellt werden, mit der auch schlecht reflektierende Objekte vermessen werden können. Ein weiterer wesentlicher Vorteil des vorgeschlagenen PMD-Systems liegt in der Erreichbarkeit einer sehr hohen Bildwiederholrate.

Die Werte der Veränderung einer Phasenlage des Modulationssignals für eine Sendeeinheit sind durch eine Systemkalibrierung ermittelbar. Hierbei wird beispielsweise ein Objekt in bekannter Entfernung mehrmals mit dem PMD-System vermessen, wobei während der einzelnen Messzyklen jeweils nur eine der Lichtquellen aktiv ist. Sind die erhaltenen Entfernungswerte unterschiedlich, so werden aus den Entfernungsunterschieden Korrekturwerte für die Phasenlage der einzelnen Sendeeinheiten erhalten. Nach Anwendung der Korrekturwerte liefert das PMD-System für alle Sendeeinheiten die gleichen Entfernungen.

Jeder Sendeeinheit ist eine Anpassungseinheit zugeordnet, wobei jede Anpassungseinheit zur individuellen Veränderung der Phasenlage des gemeinsamen Modulationssignals ausgebildet ist. Bevorzugt sind die Anpassungseinheiten zwischen der zentralen Modulationseinheit und den jeweiligen Sendeeinheiten angeordnet. Jede Anpassungseinheit ist derart ausgebildet, dass die Phasenlage des durch die zentrale Modulationseinheit einheitlich bereitgestellten Modulationssignals in individueller Weise für die zugeordnete Sendeeinheit derart veränderbar ist, dass mit jeder Sendeeinheit identische Abstandswerte des Objekts in der Szene erreicht werden.

In vorteilhafter Weise ist die Phasenlage des gemeinsamen Modulationssignals für jede Sendeeinheit individuell derart veränderbar, dass im Fernfeld der gesamten Anordnung an Sendeeinheiten ein Sendesignal mit einer homogenen Phase erzeugbar ist. Insbesondere am Objekt, zu dem der Abstand ermittelt werden soll, kann dadurch ein Sendesignal mit einer homogenen Phase erzeugt werden. Falls das Sendesignal eines PMD-Systems aus mehren Lichtquellen stammt, werden alle Sendeeinheiten auch mit einem gemeinsamen Modulationssignal und somit mit einer phasenstarren Modulation betrieben, jedoch ist es hierbei wesentlich, dass die Phase der einzelnen Sendeeinheiten einstellbar ist. Die Phasenlage der einzelnen Sendeeinheiten ist dabei derart abgleichbar, dass im Fernfeld des Ensembles der Sendeeinheiten eine Welle mit homogener Phase entsteht. Fehlmessungen infolge unterschiedlicher Phasen der Sendeeinheiten können dadurch verhindert werden.

In vorteilhafter Weise sind die Sendeeinheiten im Wesentlichen gleichzeitig mit den gemeinsamen Modulationssignalen modulierbar. Es wird somit nicht ein Modulieren der einzelnen Sendeeinheiten in einer vorgebbaren Reihenfolge durchgeführt, sondern alle Sendeeinheiten des PMD-Systems werden im Wesentlichen gleichzeitig mit dem gemeinsamen Modulationssignal moduliert.

Das PMD-System ist in bevorzugter Weise in einem Kraftfahrzeug angeordnet und zur Abstandsbestimmung eines Objekts in einem Umfeld eines Kraftfahrzeugs ausgebildet. Das PMD-System kann dabei im oder am Fahrzeug angeordnet sein. Die Systemkalibrierung kann dann bereits vor dem Einbau des PMD-Systems ins Fahrzeug oder nach dem Einbau in das Fahrzeug jedoch vor der Auslieferung des Fahrzeugs durchgeführt werden. Es kann jedoch auch vorgesehen ein, dass eine Kalibrierung des PMD-Systems in festen Zeitabständen, beispielsweise bei Kundendienstterminen, durchgeführt wird. Es kann jedoch auch vorgesehen sein, dass eine Kalibrierung des PMD-Systems in vorgebbaren Zeitabständen, beispielsweise alle 10 Minuten, beim Betrieb des Fahrzeugs selbstständig durchgeführt wird. Die erforderlichen Einstellwerte der Anpassungseinheiten können in einer Speichereinheit abgelegt sein oder in Echtzeit bereitgestellt werden.

In bevorzugter Weise sind die Sendeeinheiten zur Erzeugung von optischen Sendesignalen ausgebildet. Das PMD-System ist jedoch nicht auf die Erzeugung von optischen Sendesignalen und somit Lichtwellen beschränkt. Vielmehr kann die Methode allgemein für Elemente mit PMD-typischer Anordnung zum Empfang elektromagnetischer Wellen, zum Beispiel auch von Mikrowellen verwendet werden. Entsprechend können beispielsweise Sendeeinheiten in Form von Lasern, Dioden und Dioden-Arrays, Leuchtstofflampen, aber auch Mikrowellensendern und Radarsendern vorliegen.

Die Sendeeinheiten sind in bevorzugter Weise derart angeordnet, dass sich ihre Öffnungswinkel zumindest bereichsweise überlappen. Dadurch kann ein relativ großer Bereich einer auszuleuchtenden Szene abgedeckt werden.

Ein erfindungsgemäßes Verfahren zur Abstandsmessung von Objekten mittels eines PMD-Systems, welches zumindest eine erste und eine zweite intensitätsmodulierbare Sendeeinheit aufweist, ist zum Ausleuchten einer relativ großen Szene ausgebildet. Die beiden Sendeeinheiten werden an unterschiedlichen Positionen relativ zum Objekt angeordnet und somit räumlich getrennt positioniert. Darüber hinaus weist das PMD-System auch einen PMD-Empfänger auf, wobei von den Sendeeinheiten Sendesignale gesendet werden, welche von dem Objekt reflektiert werden und durch den PMD-Empfänger detektiert werden. Zum im Wesentlichen identischen Modulieren der Sendeeinheiten wird ein gemeinsames Modulationssignal von einer zentralen Modulationseinheit erzeugt und bereitgestellt. Eine Phasenlage des Modulationssignals wird für jede Sendeeinheit individuell derart verändert, dass mit jeder der beiden Sendeeinheiten im Wesentlichen gleiche Abstandswerte des Objekts ermittelt werden. Durch das erfindungsgemäße Verfahren kann eine sehr genaue Abstandsmessung eines Objekts mit einem PMD-System erreicht werden, welches eine Mehrzahl an unterschiedlich positionierten Sendeeinheiten aufweist. Fehlmessungen können dadurch zumindest deutlich reduziert werden.

Vorteilhafte Ausgestaltungen des vorgeschlagenen PMD-Systems sind als vorteilhafte Weiterbildungen des erfindungsgemäßen Verfahrens anzusehen.

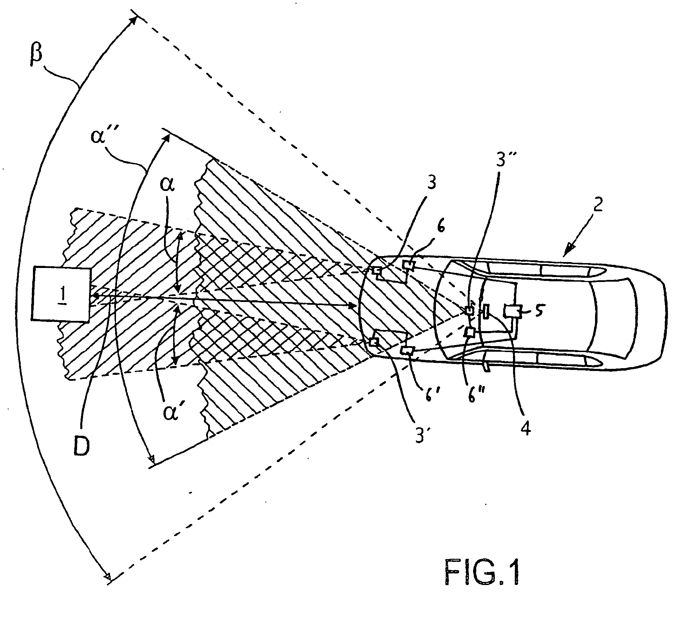

Ein Ausführungsbeispiel der Erfindung wird nachfolgend anhand einer schematischen Zeichnung näher erläutert. Die einzige Fig. 1 zeigt ein Kraftfahrzeug mit einem darin integrierten PMD-System in vereinfachter Darstellung.

Das PMD-System zur Abstandsmessung eines Objekts 1 arbeitet nach dem Laufzeitverfahren. Dazu umfasst das in einem Kraftfahrzeug 2 angeordnete PMD-System im Ausführungsbeispiel drei räumlich getrennt voneinander angeordnete Sendeeinheiten 3, 3' und 3". Im Ausführungsbeispiel sind die intensitätsmodulierbaren Sendeeinheiten 3, 3' und 3" zur Erzeugung von optischen Lichtsignalen ausgebildet. Des Weiteren umfast das PMD-System einen PMD-Empfänger 4. Die Sendeeinheiten 3, 3' und 3" sind mit einer zentralen Modulationseinheit 5 verbunden. Zwischen jeder Signalverbindung zwischen der zentralen Modulationseinheit 5 und den Sendeeinheiten 3, 3' und 3" sind Anpassungseinheiten 6, 6' und 6" angeordnet. Durch die zentrale Modulationseinheit 5 wird ein gemeinsames Modulationssignal erzeugt, welches zur identischen Modulation der Sendeeinheiten 3, 3' und 3" bereitgestellt wird. Dieses Modulationssignal wird an jede der Anpassungseinheiten 6, 6' und 6" übertragen. Durch die Anpassungseinheiten 6, 6' und 6" wird die Phasenlage des gemeinsamen Modulationssignals in einer Weise jeweils individuell verändert, dass mit jeder Sendeeinheit 3, 3' und 3" Sendesignale erzeugt werden, derart, dass mit jeder Sendeeinheit 3, 3' und 3" identische Abstandswerte des Objekts 1 in der Szene ermittelbar sind.

Im Ausführungsbeispiel wird die Phasenlage des gemeinsamen Modulationssignals durch die drei Anpassungseinheiten 6, 6' und 6" jeweils in individueller Weise derart verändert, dass die Phasenlage der einzelnen Sendeeinheiten 3, 3' und 3" derart abgeglichen ist, dass im Fernfeld des Ensembles der Sendeeinheiten 3, 3' und 3" eine Welle mit homogener Phase ausgebildet ist. Im Ausführungsbeispiel wird die Phasenlage der einzelnen Sendeeinheiten 3, 3' und 3" durch die jeweils zugeordneten Anpassungseinheiten 6, 6' und 6" dabei derart abgeglichen, dass im Wesentlichen im Bereich des Objekts 1 eine Welle mit homogener Phase entsteht.

Die erforderlichen Einstellwerte der Anpassungseinheiten 6, 6' und 6" sind durch eine Systemkalibrierung des PMD-Systems ermittelbar und bereitstellbar. Die Einstellung der Anpassungseinheiten 6, 6' und 6" kann durch eine nicht dargestellte Steuereinheit erfolgen, welche bevorzugt über nicht dargestellte Steuerleitungen mit den einzelnen Anpassungseinheiten 6, 6' und 6" elektrisch verbunden ist. Diese Steuereinheit kann als separate Einheit ausgebildet sein oder aber auch mit der Modulationseinheit 5 zusammengefasst sein und somit eine Einheit bilden.

Die intensitätsmodulierbaren Sendeeinheiten 3, 3' und 3" senden ihre Sendesignale im Wesentlichen gleichzeitig in das Umfeld des Kraftfahrzeugs 2 aus. Die Sendesignale werden an dem Objekt 1 im Fahrzeugumfeld, wie z. B. an einem anderen vorausfahrenden Kraftfahrzeug oder an einem stehenden Hindernis, reflektiert und die reflektierten Signale werden von dem PMD-Empfänger 4 empfangen. Die Laufzeit der emittierten und reflektierten Signale ist zum Abstand D zwischen dem Objekt 1 und dem Kraftfahrzeug 2 proportional.

Im Ausführungsbeispiel sind die Sendeeinheiten 3 und 3' im unteren Bereich von Scheinwerfern des Kraftfahrzeugs 2 angeordnet. Die dritte Sendeeinheit 3" ist im oberen Bereich des Innenraums des Kraftfahrzeugs, beispielsweise im Bereich des Innenspiegels, angeordnet. Darüber hinaus ist im Ausführungsbeispiel der PMD-Empfänger 4 ebenfalls im Bereich des Innenspiegels und im Wesentlichen unmittelbar benachbart zu der dritten Sendeeinheit 3" angeordnet.

Im gezeigten Ausführungsbeispiel weisen die beiden Sendeeinheiten 3 und 3' eine jeweils relativ große Sendeleistung und einen verhältnismäßig geringen Öffnungswinkel α und α' auf, welcher etwa 20° betragen kann. Dadurch kann ein Fernbereich vor dem Kraftfahrzeug 2 in einem schmalen Raumwinkel ausreichend ausgeleuchtet werden. Die dritte Sendeeinheit 3" weist eine geringere Sendeleistung, aber dafür einen größeren Öffnungswinkel α" auf, welcher im Ausführungsbeispiel etwa 60° beträgt. Durch die Sendeeinrichtung 3" kann der Nahbereich vor dem Kraftfahrzeug 2 in einem weiten Raumwinkel ausgeleuchtet werden. Wie in der Darstellung in Fig. 1 zu erkennen ist, überlappen sich die Öffnungswinkel α, α' und α" der verschiedenen Sendeeinrichtungen 3, 3' und 3", so dass das interessierende Umfeld vor dem Kraftfahrzeug 2 vollständig ausgeleuchtet werden kann.

Zum optimalen Empfangen der an dem Objekt 1 reflektierten Signale besitzt der in dem Kraftfahrzeug 2 positionierte PMD-Empfänger 4 einen relativ großen Öffnungswinkel β von etwa 80°, der durch die unmittelbar benachbarte dritte Sendeeinheit 3" nur unwesentlich eingeschränkt ist. Die durch den PMD-Empfänger 4 empfangenen Signale werden durch eine nicht dargestellte Auswerteeinheit im Hinblick auf eine Abstandsmessung des Objekts 1 vom Kraftfahrzeug 2 ausgewertet. Es kann auch vorgesehen sein, dass die Auswertung der an dem Objekt 1 reflektierten und von dem PMD-Empfänger 4 empfangenen Signale direkt in dem PMD-Empfänger 4 durchgeführt wird.

Das gesamte PMD-System kann durch eine nicht gezeigte Steuereinheit im Fahrzeug gesteuert werden. Die Steuereinheit kann beispielsweise mit einem Kommunikationsbus des Fahrzeugs, beispielsweise dem CAN-Bus, verbunden sein.

## Patentansprüche

1. PMD-System zur Abstandsmessung von einem Objekt (1), mit
- einer ersten (3, 3', 3") und zumindest einer zweiten intensitätsmodulierbaren Sendeeinheit (3, 3', 3"), wobei die genannten Sendeeinheiten (3, 3', 3") an unterschiedlichen Positionen relativ zum Objekt (1) angeordnet sind, und
- mindestens einem PMD-Empfänger (4), welcher zum Empfangen der von den Sendeeinheiten (3, 3', 3") gesendeten und von dem Objekt (1) reflektierten Signale ausgebildet ist,
**gekennzeichnet durch**
- eine zentrale Modulationseinheit (5), welche zur Ansteuerung der einzelnen Sendeeinheiten (3, 3', 3") mit einem identischen Modulationssignal ausgebildet ist, wobei
- jeder Sendeeinheit (3, 3', 3") eine Anpassungseinheit (6, 6', 6") zugeordnet ist, welche jeweils zur individuellen Veränderung der Phasenlage des Modulationssignals ausgebildet ist, wobei ein Wert der Veränderung einer Phasenlage des Modulationssignals für eine Sendeeinheit (3, 3', 3") **durch** eine Systemkalibrierung ermittelbar ist, und wobei
- das PMD-System derart ausgebildet ist, dass eine Phasenlage des Modulationssignals für jede Sendeeinheit (3, 3', 3") individuell derart veränderbar ist, dass mit jeder der genannten Sendeeinheiten (3, 3', 3") im Wesentlichen gleiche Abstandswerte des Objekts (1) ermittelbar sind.

2. PMD-System nach Anspruch 1,
**dadurch gekennzeichnet, dass**
die Anpassungseinheiten (6, 6', 6") zwischen der zentralen Modulationseinheit (5) und den Sendeeinheiten (3, 3', 3") angeordnet sind.

3. PMD-System nach einem der vorhergehenden Ansprüche,
**dadurch gekennzeichnet, dass**
die Sendeeinheiten (3, 3', 3") im Wesentlichen gleichzeitig mit dem Modulationssignal modulierbar sind.

4. PMD-System nach einem der vorhergehenden Ansprüche,
**dadurch gekennzeichnet, dass**
die Sendeeinheiten (3, 3', 3") zur Erzeugung von optischen Sendesignalen ausgebildet sind.

5. PMD-System nach einem der vorhergehenden Ansprüche,
**dadurch gekennzeichnet, dass**
die Sendeeinheiten (3, 3', 3") derart angeordnet sind, dass sich ihre Öffnungswinkel zumindest bereichsweise überlappen.

6. PMD-System nach einem der vorhergehenden Ansprüche, welches zur Abstandbestimmung eines Objekts (1) in einem Umfeld eines Kraftfahrzeugs (2) ausgebildet ist.

7. Verfahren zur Abstandmessung eines Objekts (1) mittels eines PMD-Systems, mit einer ersten (3, 3', 3") und zumindest einer zweiten intensitätsmodulierbaren Sendeeinheit(3, 3', 3"), wobei die genannten Sendeein heiten (3, 3', 3") an unterschiedlichen Positionen relativ zum Objekt angeordnet werden, und einem PMD-Empfänger (4), mit welchem die von den Sendeeinheiten (3, 3', 3") gesendeten und von dem Objekt (1) reflektierten Signale detektiert werden,
**dadurch gekennzeichnet, dass**
ein gemeinsames Modulationssignal von einer zentralen Modulationseinheit (5) für die genannten Sendeeinheiten (3, 3', 3") erzeugt und an Anpassungseinheiten (6, 6', 6") übertragen wird, welche jeweils einer der Sendeeinheiten (3, 3' 3") zugeordnet sind und durch welche eine Phasenlage des Modulationssignals für jede Sendeeinheit (3, 3', 3") individuell derart verändert wird, dass mit jeder der genannten Sendeeinheiten (3, 3', 3") im Wesentlichen gleiche Abstandswerte des Objekts (1) ermittelt werden, wobei ein Wert der Veränderung einer Phasenlage des Modulationssignals für eine Sendeeinheit (3, 3', 3") durch eine Systemkalibrierung ermittelbar ist.

## Claims

1. PMD system for measuring the distance from an object (1), having
- a first intensity-modulatable transmitting unit (3, 3', 3") and at least one second intensity-modulatable transmitting unit (3, 3', 3"), the said transmitting units (3, 3', 3") being arranged at different positions relative to the object (1), and
- at least one PMD receiver (4) which is designed to receive the signals transmitted by the transmitting units (3, 3', 3") and reflected by the object (1),
**characterized by**
- a central modulation unit (5) which is designed to control the individual transmitting units (3, 3', 3") with an identical modulation signal,
- each transmitting unit (3, 3', 3") being assigned an adjustment unit (6, 6', 6") which is respectively designed to individually change the phase angle of the modulation signal, a value of the change in a phase angle of the modulation signal for a transmitting unit (3, 3', 3") being able to be determined by system calibration, and
- the PMD system being designed in such a manner that a phase angle of the modulation signal for each transmitting unit (3, 3', 3") can be individually changed in such a manner that essentially the same distance values of the object (1) can be determined using each of the said transmitting units (3, 3', 3").

2. PMD system according to Claim 1,
**characterized in that**
the adjustment units (6, 6', 6") are arranged between the central modulation unit (5) and the transmitting units (3, 3', 3").

3. PMD system according to one of the preceding claims,
**characterized in that**
the transmitting units (3, 3', 3") can be modulated essentially at the same time with the modulation signal.

4. PMD system according to one of the preceding claims,
**characterized in that**
the transmitting units (3, 3', 3") are designed to generate optical transmission signals.

5. PMD system according to one of the preceding claims,
**characterized in that**
the transmitting units (3, 3', 3") are arranged in such a manner that their opening angles overlap at least in some regions.

6. PMD system according to one of the preceding claims, which is designed to determine the distance from an object (1) in an area surrounding a motor vehicle (2).

7. Method for measuring the distance from an object (1) using a PMD system having a first intensity-modulatable transmitting unit (3, 3', 3") and at least one second intensity-modulatable transmitting unit (3, 3', 3"), the said transmitting units (3, 3', 3") being arranged at different positions relative to the object, and a PMD receiver (4) which is used to detect the signals transmitted by the transmitting units (3, 3', 3") and reflected by the object (1),
**characterized in that**
a common modulation signal is generated by a central modulation unit (5) for the said transmitting units (3, 3', 3") and is transmitted to adjustment units (6, 6', 6") which are each assigned to one of the transmitting units (3, 3', 3") and individually change a phase angle of the modulation signal for each transmitting unit (3, 3', 3") in such a manner that essentially the same distance values of the object (1) are determined using each of the said transmitting units (3, 3', 3"), a value of the change in a phase angle of the modulation signal for a transmitting unit (3, 3', 3") being able to be determined by system calibration.

## Revendications

1. Système PMD pour la mesure de la distance à un objet (1), comprenant
- une première (3, 3', 3") et au moins une deuxième unité émettrice (3, 3', 3") pouvant être modulée en intensité, lesdites unités émettrices (3, 3', 3") étant disposées dans des positions différentes par rapport à l'objet (1), et
- au moins un récepteur PMD (4), qui est réalisé pour recevoir les signaux envoyés par les unités émettrices (3, 3', 3") et réfléchis par l'objet (1),
**caractérisé par**
- une unité de modulation centrale (5), qui est réalisée pour commander les unités émettrices individuelles (3, 3', 3") avec un signal de modulation identique,
- chaque unité émettrice (3, 3', 3") étant associée à une unité d'adaptation (6, 6', 6"), qui est réalisée dans chaque cas pour modifier individuellement la position de phase du signal de modulation, une valeur de la modification d'une position de phase du signal de modulation pour une unité émettrice (3, 3', 3") pouvant être déterminée par un étalonnage du système, et
- le système PMD étant réalisé de telle sorte qu'une position de phase du signal de modulation pour chaque unité émettrice (3, 3', 3") puisse être modifiée individuellement, de telle sorte qu'avec chacune desdites unités émettrices (3, 3', 3"), des valeurs de distance à l'objet (1) essentiellement identiques puissent être déterminées.

2. Système PMD selon la revendication 1,
**caractérisé en ce que**
les unités d'adaptation (6, 6', 6") sont disposées entre l'unité de modulation centrale (5) et les unités émettrices (3, 3', 3").

3. Système PMD selon l'une quelconque des revendications précédentes,
**caractérisé en ce que**
les unités émettrices (3, 3', 3") peuvent être modulées essentiellement simultanément avec le signal de modulation.

4. Système PMD selon l'une quelconque des revendications précédentes,
**caractérisé en ce que**
les unités émettrices (3, 3', 3") sont réalisées pour produire des signaux d'émission optiques.

5. Système PMD selon l'une quelconque des revendications précédentes,
**caractérisé en ce que**
les unités émettrices (3, 3', 3") sont disposées de telle sorte que leurs angles d'ouverture se chevauchent au moins en partie.

6. Système PMD selon l'une quelconque des revendications précédentes, qui est réalisé pour déterminer la distance à un objet (1) dans un environnement d'un véhicule automobile (2).

7. Procédé pour la mesure de la distance à un objet (1) au moyen d'un système PMD, comprenant une première (3, 3', 3") et au moins une deuxième unité émettrice (3, 3', 3") pouvant être modulée en intensité, lesdites unités émettrices (3, 3', 3") étant disposées dans des positions différentes par rapport à l'objet, et un récepteur PMD (4), avec lequel les signaux envoyés par les unités émettrices (3, 3', 3") et réfléchis par l'objet (1) sont détectés,
**caractérisé en ce**
**qu'**un signal de modulation commun est produit par une unité de modulation centrale (5) pour lesdites unités émettrices (3, 3', 3") et est transmis à des unités d'adaptation (6, 6', 6"), qui sont associées à chaque fois à l'une des unités émettrices (3, 3', 3"), et par le biais desquelles une position de phase du signal de modulation pour chaque unité émettrice (3, 3', 3") est modifiée individuellement, de telle sorte qu'avec chacune desdites unités émettrices (3, 3', 3"), des valeurs de distance à l'objet (1) essentiellement identiques soient déterminées, une valeur de la modification d'une position de phase du signal de modulation pour une unité émettrice (3, 3', 3") pouvant être déterminée par un étalonnage du système.
